# EUROPEAN PATENT SPECIFICATION

(11) **EP 0 354 903 B1**
(45) Date of publication and mention of the grant of the patent: **26.10.1994**
(21) Application number: 88901889.1
(22) Date of filing: 26.02.1988
(51) Int. Cl.: H04Q 7/04

(54) **CELLULAR TELEPHONE APPARATUS**
ZELLULAR-TELEFONGERÄT
APPAREIL TELEPHONIQUE CELLULAIRE

(30) Priority: 04.03.1987 GB 8705005
(43) Date of publication of application: 21.02.1990
(73) Proprietor: MOTOROLA, INC., Schaumburg, IL 60196 (US)
(72) Inventor: Rodrigues, Michael Victor, Ealing, London W13 0BZ (GB)
(74) Representative: Ibbotson, Harold
(86) International application number: GB8800134
(87) International publication number: WO8806830

(56) References cited:
- EP-A- 0 011 063
- EP-A- 0 186 004
- EP-A- 0 193 316
- EP-A- 0 212 761
- DE-A- 2 209 134
- DE-B- 1 006 474
- Patent Abstracts of Japan, vol. 10, no. 236 (E-428)(2292), 15 August 1986 & JP, A, 6167336
- International Conference Mobile Radio Systems and Techniques, 10-13 September 1984 (York, GB), pages 11-15; R.C. French: "A high technology VHF radio paging receiver"

## Description

### DESCRIPTION OF INVENTION

Improvements in or relating to a cellular telephone apparatus.

THE PRESENT INVENTION relates to a cellular telephone apparatus. More particularly the invention relates to a transportable or hand held portable cellular telephone apparatus.

During recent years in developed countries extensive national public duplex UHF mobile radio telecommunication networks have been established. Known typically by names such as TACS - Total Access Communication System - used in Britain, AMPS - Advanced Mobile Phone System - used in USA, NMT - Nordic Mobile Telephones - used in the Nordic Countries, and NAMTS - used in Japan (not to speak of the proposed Pan-European Digital Cellular Radio Network), the systems enable one to make or receive telephone calls from a phone in a vehicle, brief case or pocket, to any other telephone in the world, which works almost as conveniently as a home or office phone.

The networks, which are also known as "Cellular Communications", divide the area of a country into smaller areas called "cells". Each cell is served by a radio transmitting and receiving station known as a "base station", the range of which overlaps adjacent cells. Utilizing specially dedicated UHF radio channels (of typically 25 KHz separation and 45 MHz duplex spacing) in the frequency bands of typically 890 - 915 MHz (for transmitting) and 935 - 960 MHz (for receiving), each cellphone (also known as a "mobile") is in communication with the cell area base station which in turn is (landline and/or microwave) linked back to a central computer controlled electronic "Mobile Switching Centre" (MSC) also known as an "Electronic Mobile Exchange" (EMX). The Electronic Mobile Exchange provides the necessary telecommunication link with other mobiles in the same and other cells, and also with the public national and international switched telephone network.

As cellphone users move from one cell area to another, the system automatically switches control of the call from the cell they are leaving to the cell they are entering. The process known as "Hand Off" enables the cellphone users to continue their calls uninterrupted while moving around the country. The Computer Controlled Electronic Mobile Exchange is provided with complicated software to monitor and control the whole system.

At present, to scan the broad band frequency spectrum of Cellular Radio, and to Register, Monitor and Respond to EMX control commands each cellphone apparatus is provided with monitoring electronic apparatus including typically:-
- a Duplexer Unit
- a Synthesizer
- a Universal Asychronous Receiver/Tranxmitter (UART)
- a Decoder/Encoder Unit
- an Analogue to Digital Converter
- a Watchdog Circuit
- an Audio Path Circuit

all of which must be active or energized in the "Idle Mode", or "sleep mode" (the condition in which a cellphone apparatus has registered its identity/presence and is ready to receive calls, but is neither being paged, nor making, nor receiving a telephone call).

The big drawback or disadvantage of present cellphone apparatus/Cellular Systems is that in this Sleep Mode the electric current consumption (of the monitoring apparatus) is significantly high (typically 80 - 175 milliamps), largely because at the Ultra High Frequency bands used, technology does not yet exist to manufacture low power, micro-chip integrated circuitry - (current microchip technology at these high frequencies makes use of bipolar chips which still have a high current/energy consumption). This disadvantage is further aggravated by command signals from the EMX requiring mobiles to transmit periodically to register and reregister their presence, identification and cell area location.

In the case of hand held portables, this heavy energy consumption constitutes a major problem, resulting in a very limited battery life (typically 3 - 5 hours) after which the subscriber is disconnected and not contactable. Even with this limited battery life, present day hand held portables still have to carry large battery packs, which makes them heavy and bulky. In the case of car cellphones the high energy consumption of the cellphone is sufficient to cause the vehicle battery to go flat if left on overnight; and in an endeavour to overcome this problem, car cellphone manufacturers have had to resort to providing special automatic circuits to "switch off" the cellphone after a pre-determined period (typically 4 hours).

By contrast also during recent years VHF Digital Radio Paging Networks have been established enabling a Radio Pager User to be alerted from any Telephone with access to the Public Telephone Network. By directly dialling the users Radio Paging Number (typically without charge) one is connected to an unmanned automatic Computer Controlled Radio Paging Centre which is (landline and/or micro-wave) linked to Transmitting Stations covering most of the Country. Radio Pagers are typically small and light and have a long battery life. This is largely because they receive and operate on lower radio frequencies - the VHF band (typically 138 - 174 MHz), enabling lower current consumption and/or the use of CMOS micro-chip transistorized circuitry. Battery energy conservation is also enhanced by micro-chip clock circuits which provide frequent periodic cyclic switching "On" and "Off" of the radio pager receiver. The "Off" period is typically substantially longer than the "On" period. However for the purpose of this invention, this cyclic feature preferably need not be utilized.

The object of the present invention is to overcome this heavy energy consumption/short battery life disadvantage of the present cellphone systems/apparatus in the sleep mode, by providing a "Supplementary Unit for Portable Energy Reduction", conveniently known as - "SUPER", together with corresponding modifications and additions to the system Cellular Network Software and Hardware in order to operate the "SUPER" "Long Sleep Life" facility advantageously without affecting existing cellular telephone subscribers who do not wish to avail themselves of the "SUPER" Long Sleep Life facility. Thus the present systems, known as TACS, AMPS, NMT, and NAMTS would be upgraded and for convenience known as SUPERTACS, SUPERAMPS, SUPERNMT, and SUPERNAMTS.

From Patent Abstracts of Japan, vol. 10, no. 236 (E-428) [2292], 15 August 1986 (JP-A-6167336) there is known a combination of a co-ordinated selective call receiver and mobile radiotelephone in which the selective call receiver shares the telephone number of the mobile radiotelephone. Calls placed to the mobile radiotelephone's number are accepted by a common fixed central and transmitted such that the mobile radiotelephone call may be received by the selective call receiver. If the devices are coupled together, the selective call receiver may turn on a power source for the mobile radiotelephone to initiate a response. This arrangement requires an identical call identification for the transceiver handling cellular telephone signals and the second radio receiver, it requires that the same frequency band be employed for communicating with the selective call receiver and with the mobile radiotelephone, and it requires that the transceiver initiate a response to a page directed to the selective call receiver.

According to the present invention there is provided a cellular radio telephone apparatus as claimed in claim 1. It will be understood that the present invention does not rely upon an identical call identification for the transceiver handling cellular telephone signals and the second radio receiver. This independence allows different frequency bands to be easily employed and does not demand that the transceiver initiate a response to a page directed to the selective call receiver.

In order that the invention may be more readily understood, and so that further features thereof may be appreciated, the invention will now be described by way of example with reference to the accompanying drawings in which:

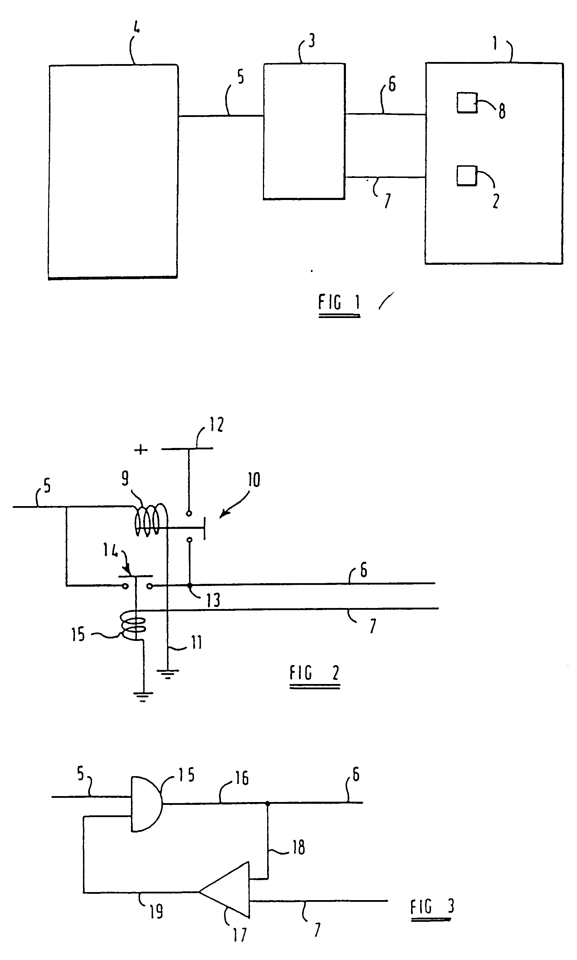

FIGURE 1 is a block diagram of a cellular telephone in accordance with the invention;
FIGURE 2 illustrates a switching circuit that forms part of the embodiment of FIGURE 1;
FIGURE 3 is a circuit diagram of an alternative switching arrangement which can form part of an alternative embodiment of the invention;
FIGURE 4 is an alternative Long Sleep Life SUPERTACS cellphone block diagram;

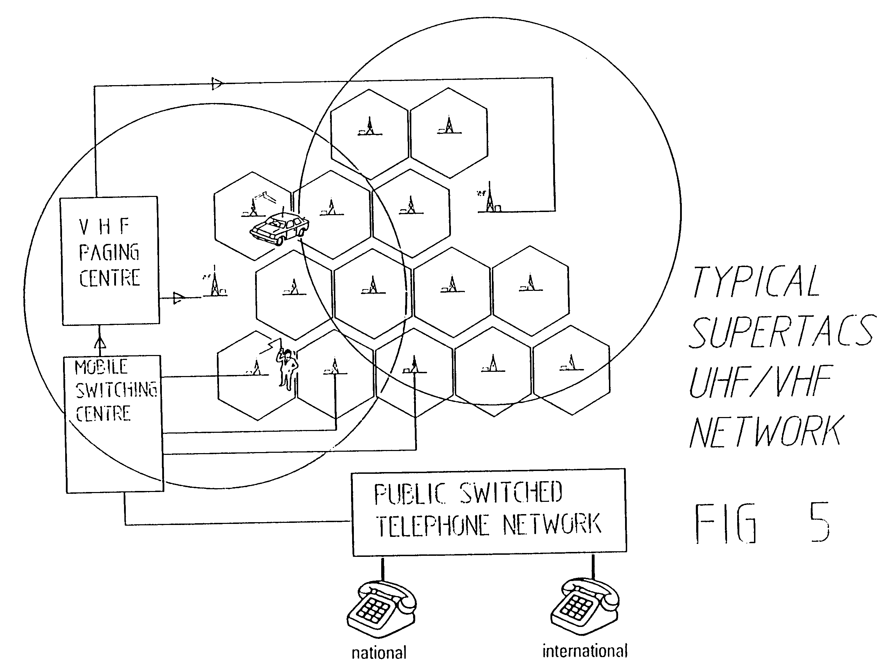

FIGURE 5 is a typical SUPERTACS UHF/VHF Network diagram.

Referring initially to the drawings, a conventional cellular telephone 1 is indicated by a simple block. The cellular telephone itself does not require a description for a full understanding of the present invention, but the cellular telephone is provided with monitoring electronic apparatus to enable the cellular telephone to communicate, via a base station, with the electronic mobile exchange or mobile switching station of the cellular communication system in order to register, monitor and respond to control commands. The cellular telephone is also provided with the usual circuits and facilities to enable the user of the telephone to make and receive calls.

At this stage it should be mentioned that the cellular telephone is provided with a reset button 2 which can be pressed, by operator of the cellular telephone, at the end of a call. In alternative types of cellular telephone different arrangements are provided, such as a magnetic rest for a handpiece of the cellular telephone, but means are always provided which are actuated at the end of a call on a cellular telephone to restore the cellular telephone to the idle condition.

In the present invention, the cellular telephone is associated with a switching circuit 3 which can effectively be used to switch on the main cellular telephone apparatus. Thus the cellular telephone is, in use, completely switched off until it is activated by the switching circuit 3.

The switching circuit 3, which is a relay switching circuit, is activated in response to a specific signal received by a low frequency narrow band signal receiving means 4. The low frequency narrow band signal receiving means 4 may comprise a circuit equivalent to a conventional digital radio pager which responds to a low frequency signal, typically of 150 MHz. Thus, such a signal receiving means may readily be fabricated utilising microchip technology, and consequently the narrow band signal receiving means 4 may be permanently activated whilst only consuming a relatively small amount of power. The amount of power consumption may be further reduced by cyclically switching the signal receiving means 4 on and off in a regular manner, so that during any period of time the receiving means 4 is only activated for relatively brief periods which are spaced apart.

In the present invention, when the appropriate allocated signal is received by the low frequency signal receiving circuit 4, instead of actuating a buzzer or bleeper, as in the case of a conventional radio pager, a signal is passed, over the lead 5, to the relay switching arrangement 3. When it receives a signal over the lead 5, even if it is a transitory signal, the switching arrangement 3 switches on the main battery supply to the rest of the cellular telephone apparatus. The cellular telephone apparatus is thus fully activated and can register its presence, via the nearest base station, to the electronic mobile exchange or mobile switching centre. The cellular telephone may receive appropriate command signals, and an audio channel may then be opened to enable the cellular telephone to receive a call.

It will thus be understood that when a call is to be made to a particular cellular telephone initially the cellular telephone will receive a low frequency narrow band signal to be received by the receiving means 4, and this will serve to activate the main circuits of the cellular telephone. Subsequently, when the cellular telephone has been activated, the cellular telephone will receive the conventional signals to establish the required communication so that the person using the cellular telephone can receive the call.

When a call is accepted, and a conversation is in progress, an appropriate signal may be provided, from the cellular telephone 1, via the lead 7, to the switching arrangement 3, to maintain the switching arrangement 3 in such a condition that the main battery is kept connected to the rest of the cellular telephone apparatus. Thus the switching arrangement 3 can be considered to be a latching circuit.

Additionally, the switching arrangement 3 may be provided with a time delay arrangement so that, whenever the switching arrangement 3 is activated in response to a signal from the receiving means 4 over the lead 5, the switching arrangement will remain in a condition in which it maintains the battery supply to the cellular telephone apparatus for at least a predetermined period of time which may, for example, be ten minutes. This should be quite sufficient to enable the user of the cellular telephone apparatus to accept the call, or if the call is lost due to interference or for some other unforeseen cause, to accept a second attempt made by the same caller.

It will be understood that the mobile switching centre or electronic mobile exchange will be so arranged, and will be provided with such software, that when it is desired to put a call through to a cellular telephone, initially a command is forwarded to a low frequency transmitter which transmits a digital signal to be received by the appropriate receiving means 4, and after a predetermined time delay, the normal high frequency signals will be transmitted to the cellular telephone. It is envisaged that the existing radio paging transmitters may be utilised to transmit the initial low frequency signal, although it may be preferred to install additional low frequency transmitters to perform this function. These low frequency transmitters need not be located at the existing base stations, but may be so located if desired.

When a call made on a cellular telephone is terminated, a button such as the reset button 2 may be pressed. In the described imbodiment, when the reset button 2 is pressed the signal transmitted over the lead 7 to the switching arrangement 3 is terminated and this acts to alter the state of the switching arrangement 3 such that a signal is no longer provided to the cellular telephone along the lead 6. The main circuits, including the receiver and transmitter, of the cellular telephone is thus effectively switched off, saving the batteries of the cellular telephone.

The cellular telephone may, of course, be provided with an override button 8 which serves to activate an appropriate by pass switch within the cellular telephone to ensure that the cellular telephone is always switched on and is thus always able to receive conventional high frequency broadband signals, should the person using the cellular telephone so desire. Also, of course, the cellular telephone will be provided with appropriate controls to enable the cellular telephone to be activated at will when it is desired to make a call from the cellular telephone.

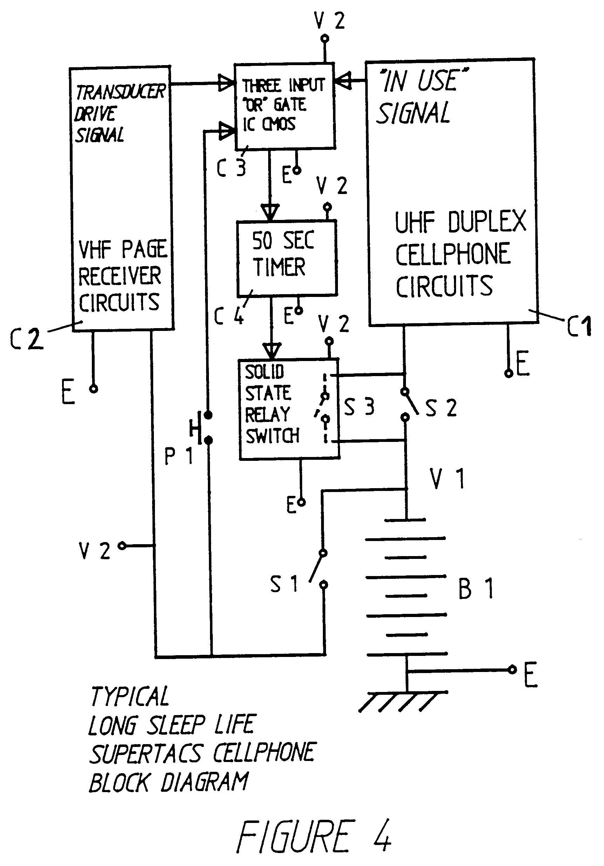

Referring now to Figure 2 one example of the switching circuit 3 is illustrated. It can be seen that the lead 5 is connected, through the solenoid coil 9 of a normally open solenoid operated relay switch 10 to earth, via lead 11. The relay, when closed, serves to connect a positive rail 12, to a terminal 13 which is connected to the line 6 which extends to the cellular telephone 1. The terminal 13 is also connected, by means of the contacts of a normally closed solenoid operated relay 14 to the lead 5 and thus to the input of the coil 9 of the solenoid of the relay 10.

If the circuit is in the condition illustrated in Figure 2, when the circuit 4 receives the low frequency signal a pulse is passed through the lead 5 which energizes the coil 9, thus closing the relay 10. Current from the positive rail 12 is thus fed to the terminal 13. The current from the terminal 13 can then pass through the lead 6 to activate the switching arrangement within the cellular telephone 1. Also current from the terminal 13 flows through the normally closed contacts of the relay 14 to the coil 9 of the relay 10, thus ensuring that the relay 10 is kept closed, even when the pulse is no longer received from the low frequency circuit.

The lead 7 is connected through the coil 15 of the normally closed relay 14 to earth and the arrangement is such that when the reset button 8 is pressed on the cellular telephone a pulse passes through the lead 7, and through the coil 15, thus opening the normally closed relay 14. As the normally closed relay 14 opens the circuit from the positive rail 12, through the closed contacts of the relay 10, the terminal 13 and the coil 9 of the relay 10 is broken. Thus the relay 10 re-opens, thus breaking the contact between the rail 12 and the terminal 13. Thus the cellular telephone is then de-activated, and returned to the preliminary or idle condition.

Figure 3 illustrates a circuit which can be used in place of the circuit of Figure 2, the circuit of Figure 3 being a logic circuit. The lead 5 is connected to one input of an OR gate 15. The output 16 of the OR gate 15 is connected to the lead 6 and is also connected to one input of a NAND gate 17 by means of the lead 18. The other input of the NAND gate is connected to the lead 7. The output 19 of the NAND gate 17 is connected to the other input of the OR gate 15. When a signal is received by the low frequency circuit, a logic one appears on the lead 5 which is connected to the OR gate 15. This causes a logic one to appear on the lead 16 and thus on the lead 6. Since a logic one appears on the lead 16 the logic one also appears on the lead 18 and thus one input of the NAND gate 17 receives a logic one, thus causing the logic one to be present on the output 19 which is connected to the OR gate 15. The OR gate thus remains activated even if the initial signal provided on the lead 5 terminates. However, when the reset button 8 is pressed on the cellular telephone a second logic one is supplied, through the lead 7, to the NAND gate 17, thus causing that gate to switch off, thus causing the OR gate 15 to switch off, thus terminating the logic one present on the lead 6.

The switching circuit 3 may, of course, be constructed in many other ways whilst providing the desired switching effect.

It is to be appreciated, therefore, that when the apparatus of the present invention is utilised the low frequency circuit is normally active, and since this is a low frequency circuit, which embodies integrated micro-circuitry, it is possible to run the circuit for a long period of time with only a minimum power consumption. When the low frequency circuit receives an appropriate signal, the main circuits, including the receiver and transmitter, of the cellular telephone are activated, the cellular telephone can then receive a conventional signal. Thus the low frequency circuit provides only a low current drain while the apparatus is in the quiescent or idle state, and the cellular telephone may operate in the manner of a conventional cellular telephone when it has been activated. Thus only a small battery may be needed to power the main circuits of the cellular telephone, since these circuits will only consume power when a call is in progress.

### TYPICAL "LONG SLEEP LIFE" BLOCK DIAGRAM

Figure 4 is a typical block diagram for a Long Sleep Life Supertacs cellphone apparatus. In this diagram, the rechargeable cells B1, supplying the main UHF duplex cellphone circuits, C1, via the manual switch, S2, is also used to provide power for the VHF page receiver circuits C2 (and the control circuits C3, C4, and S3), via the manual switch S1. If the Supertacs Subscriber does not wish to be disturbed at all, both manual switches S1, and S2 are switched off. To select the Long Sleep Life mode, the manual switch S2 would be kept off, and only the manual switch S1 switched on.

CALL RECEPTION: Advantageously and conveniently, each subscriber using this Long Sleep Life apparatus is provided with a telephone number containing a recognizable code or cue, eg. 0837 517 689. In this typical example, the fourth digit 7 is the code or cue for the MSC software instructions to recognize that the subscriber is a SUPER SUBSCRIBER (or typcially a SUPERTACS SUBSCRIBER). On recognition of this digital code, the MSC software is provided with instructions in its memory, to immediately generate a specific VHF coded page (for that Subscriber's apparatus) through the VHF paging network provided, and after a predetermined time delay, typically 3 secs, then generate the conventional UHF page/control signals as per the existing conventional (typical TACS) signalling sequences.

The VHF Page Receiving Circuit C2, having received the coded signal from the VHF transmitter (see figure 3), and after identification through its decoding circuits, feeds a momentary transducer drive signal to the three input "OR" LOGIC GATE IC, C3, which in turn feeds and starts up the timer, C4, which feeds and turns on the solid state relay switch, S3, and keeps it held closed for a predetermined time - typically 50 secs. It will be noticed from the diagram that the solid state relay switch, S3, bypasses the cellphone circuit manual switch, S2, and hence energizes the UHF duplex cellphone circuits, C1. This causes the cellphone to go through the (typical TACS) "power up" signalling sequence, and after receipt of the UHF page and further (typical TACS) control signalling sequences, the Subscriber is connected to the calling party, and the ringing tone, followed by acceptance of the call and conversation may ensue.

CALL INITIATION: To initiate a call, the Supertacs Subscriber pushes the spring biased manual push button, P1. This causes a momentary voltage to be fed into the three input "OR" GATE IC, C3, from the battery, B1, which in turn starts up the 50 second timer, C4, which closes the solid state relay, S3, and provides power to the UHF Duplex cellphone circuits, C1. After the apparatus registers (as per the typical TACS specification), the Subscriber may proceed to dial and make the call in the manner of typical existing cellular telephone systems. As long as activity is taking place within the UHF duplex cellphone circuit, C1, the three input "OR" GATE IC, C3, receives an "in use" signal from the UHF duplex cellphone circuit, C1, which in turn keeps the 50 second timer, C4, recycling and the solid state relay switch, S3, latched on, and hence the battery, B1, power supply maintained to the UHF cellphone circuit, C1.

CLEAR DOWN: As soon as activity within the UHF duplex cellphone circuits, C1, ceases, (either due to the conversation ending, and/or the call being terminated, and/or if there is no further signal received by the three input "OR" GATE IC, C3), the 50 second timer, C4, ceases to recycle any further, and at the end of its predetermined time (typically 50 secs), the solid state relay switch, S3, is deactivated, thereby disconnecting the battery, B1, from the heavy current consuming UHF cellphone circuits, C1, thus saving battery energy. The circuit is now in the Long Sleep Life mode. The only current consumption is that of the VHF receiver circuit, C2, and the control circuits comprising of the three input "OR" GATE IC, C3, the 50 second timer, C4, and the solid state relay switch, S3, all of which have minimal current consumption.

CONVENTIONAL UHF MODE OPTION: If the manual switch, S2, is closed (and S1 preferably open), the apparatus is not in the Long Sleep Life mode.This is an option which the subscriber may select to use:-
if a call is expected and quicker response required, or
if it is suspected that the VHF paging Network is faulty, or
if the "Super" VHF paging Network is not yet operational.

However, in this mode, battery life is limited to that of the conventional existing cellular system.

### AUTOMATIC NEW ZONE RE-REGISTRATION

It is an additional embodiment of this invention to automatically switch on the duplex UHF cellular circuits of the long sleep life cellphone apparatus to reregister its presence, identity and cell area location every time the apparatus is moved from one zone of cellular base stations to another zone in order to obviate the possibility of communication being lost as well as reduce the time it takes for a search.

It is a typical practice with existing UHF duplex cellular networks when paging a UHF duplex cellular telephone to send a UHF page simultaneously through a cluster or zone of cellular base stations. In any specific country there may be a plurality of such zones. For example, each of the 2 networks serving Britain, may have typically five such zones.

In this additional embodiment of this invention, each zone shall be covered by one or more VHF radio paging transmitters typically activated simultaneously by a zone VHF paging centre. The software on each zonal paging centre is provided with instructions to transmit a coded identity number either typically at the beginning (or end) of every coded paging number transmitted and/or periodically as an identification code. The software of the Central Processing Unit (CPU) of the VHF digital paging circuits of the Long Sleep Life Cellphone Apparatus described in this Patent, is provided with instructions to compare and store in its memory, the identity number of the VHF paging zone within which it is located. If there is no change between the paging zone identity and the zone identity numbers being received, no further activity takes place. If, however, the paging zone identity number differs from the one stored in its memory, instructions in the said CPU software shall immediately activate the transducer drive signal (see figure 4) which in turn will activate the solid state relay (via the level shifting interface, via the 50 second timer) to switch on the cellphone for a predetermined period - typically 50 seconds, sufficient time for the duplex UHF cellular circuits to switch on and re-register the cellphone's presence, identity and location. The fresh VHF paging zone identity number is now stored in the memory of the VHF paging receiver circuits and no further activity will ensue until the apparatus is moved to a new zone, and a new zone identity number received.

Thus it is evident from the above, that after a call is received, as per the typical Supertacs Signalling Sequences shown, it is only necessary to page (both on the VHF and UHF) in the zone the apparatus was last known to have registered, and there is no need for nationwide VHF and/or UHF paging.

It is thus possible to provide a cellular telephone that is truly pocket sized, that incorporates only a relatively small battery, that will operate in the normal way for a substantial period of time before the battery needs replacing, recharging, and/or boosting.

## Claims

1. A cellular radio telephone apparatus, said apparatus comprising means to establish connection with and receive electric power from a battery (B1) and a duplex cellular radio telephone transceiver (1; C1) having electronic circuits driven by said electric power adapted to receive, monitor, process and transmit cellular telephone signals in a first frequency band and having a telephone number, the cellular radio telephone apparatus characterized by:
a second radio receiver (4; C2) receiving signals in a second frequency band and having a specific coded page number, and
a normally open controlled switch (3; S2) between the battery (B1) and said duplex cellular radio telephone electronic circuit (1; C1), and
means (3) to close said normally open controlled switch in response to a reception by said second radio receiver (4; C2) of said specific coded page number transmitted on a radio signal in said second frequency band in order to provide power to said duplex cellular radio telephone electronic circuits (1; C1).

2. An apparatus according to claim 1 further characterized by means for receiving the telephone number after power is provided to said duplex cellular radiotelephone electronic circuits (1; C1) and connecting a call via the first frequency band.

3. An apparatus according to claim 1 further characterized by means which, when said switch has been closed in response to said specific coded page number, maintains said switch in the closed condition at least until a predetermined time has elapsed.

4. An apparatus according to claim 1 or 2 wherein the means to close said switch are such that said switch is maintained closed until a predetermined signal is provided.

5. An apparatus according to claim 4 further comprising means for deactivating said predetermined signal in response to the termination of a call received by the apparatus.

6. An apparatus according to claim 1 wherein the means (3) to close the normally open switch comprises a latching circuit adapted to be latched in a predetermined condition in response to said reception of said specific coded page number.

7. An apparatus according to claim 6, wherein said latching circuit incorporates a switch (10) adapted to be closed in response to said specific coded page number, the switch closing a current path which maintains the switch in a closed condition, said current path incorporating a closed second switch (14), said closed second switch being adapted to open in response to a predetermined signal to release the latching circuit.

8. An apparatus according to claim 6 wherein said latching circuit incorporates an OR gate (15) adapted to be provided with a pulse (5) in response to said specific transmitted signal, the output (16) of the OR gate being connected to one input (18) of a NAND gate (17), the output (19) of the NAND gate being connected to the other input of the OR gate, the output of the OR gate being connected to a switching arrangement adapted to activate the normally inactive receiver and transmitter, a lead (7) being connected to the other input of the NAND gate adapted to provide a said predetermined signal to the NAND gate when it is desired to deactivate the high frequency receiver.

9. An apparatus according to claim 1 wherein automatic switching on of the duplex cellular radiotelephone circuits (1, C1) is enabled whenever the apparatus is moved from one cellular zone to another cellular zone in order to achieve automatic re-registration of the apparatus.

## Patentansprüche

1. Zellular-Funktelefongerät, umfassend eine Einrichtung, um eine Verbindung mit einer Batterie (B1) und einem Duplex-Zellular-Funktelefon-Sende-Empfänger (1; C1) herzustellen und elektrische Leistung davon zu empfangen, mit durch die elektrische Leistung getriebenen elektronischen Schaltkreisen, die adaptiert sind, um zellulare Telefonsignale in einem ersten Frequenzband zu empfangen, zu überwachen, zu verarbeiten und zu senden, und mit einer Telefonnummer, wobei das Zellular-Funktelefongerät gekennzeichnet ist durch:
einen zweiten Funkempfänger (4; C2), der Signale in einem zweiten Frequenzband empfängt und eine spezifische codierte Rufnummer besitzt, und
einen normal offenen gesteuerten Schalter (3; S2) zwischen der Batterie (B1) und den Duplex-Zellular-Funktelefon-Elektronikschaltungen (1; C1), und
eine Einrichtung (3), um den normal offenen gesteuerten Schalter als Reaktion auf einen Empfang der auf einem Funksignal in dem zweiten Frequenzband gesendeten spezifischen codierten Rufnummer durch den zweiten Funkempfänger zu schließen, um die Duplex-Zellular-Funktelefon-Elektronikschaltungen (1; C1) mit Strom zu versorgen.

2. Gerät nach Anspruch 1, weiter gekennzeichnet durch eine Einrichtung, um, nachdem die Duplex-Zellular-Funktelefon-Elektronikschaltungen (1; C1) mit Strom versorgt sind, die Telefonnummer zu empfangen und einen Anruf über das erste Frequenzband durchzuschalten.

3. Gerät nach Anspruch 1, weiter gekennzeichnet durch eine Einrichtung, die, wenn der Schalter als Reaktion auf die spezifische codierte Rufnummer geschlossen worden ist, den Schalter in dem geschlossenen Zustand mindestens hält, bis eine vorbestimmte Zeit vergangen ist.

4. Gerät nach Anspruch 1 oder 2, worin die Einrichtung zum Schließen des Schalters so ist, daß der Schalter geschlossen gehalten wird, bis ein vorbestimmtes Signal bereitgestellt wird.

5. Gerät nach Anspruch 4, weiter umfassend eine Einrichtung, um das vorbestimmte Signal als Reaktion auf die Beendigung eines von dem Gerät empfangenen Anrufs zu deaktivieren.

6. Gerät nach Anspruch 1, worin die Einrichtung (3) zum Schließen des normal offenen Schalters eine verriegelnde Schaltung umfaßt, die adaptiert ist, um als Reaktion auf den Empfang der spezifischen codierten Rufnummer in einem vorbestimmten Zustand verriegelt zu werden.

7. Gerät nach Anspruch 6, worin die verriegelnde Schaltung einen Schalter (10) enthält, der adaptiert ist, um als Reaktion auf die spezifische codierte Rufnummer geschlossen zu werden, wobei der Schalter einen Stromweg schließt, der den Schalter in einem geschlossenen Zustand hält, wobei der Stromweg einen geschlossenen zweiten Schalter (14) einschließt, wobei der geschlossene zweite Schalter adaptiert ist, als Reaktion auf ein vorbestimmtes Signal zu öffnen, um die verriegelnde Schaltung freizugeben.

8. Gerät nach Anspruch 6, worin die verriegelnde Schaltung ein ODER-Gatter (15) enthält, das adaptiert ist, um als Reaktion auf das spezifische übertragene Signal mit einem Impuls (5) gespeist zu werden, wobei der Ausgang (16) des ODER-Gatters mit einem Eingang (18) eines NAND-Gatters (17) verbunden ist, wobei der Ausgang (19) des NAND-Gatters mit dem anderen Eingang des ODER-Gatters verbunden ist, wobei der Ausgang des ODER-Gatters mit einer Schaltvorrichtung verbunden ist, die eingerichtet ist, den normal inaktiven Empfänger und Sender zu aktivieren, wobei eine Leitung (7) mit dem anderen Eingang des NAND-Gatters verbunden ist, die adaptiert ist, um das vorbestimmte Signal an das NAND-Gatter anzulegen, wenn gewünscht wird, den Hochfrequenzempfänger zu deaktivieren.

9. Gerät nach Anspruch 1, worin ein automatisches Einschalten der Duplex-Zellular-Funktelefonschaltungen (1; C1) freigegeben wird, wann immer das Gerät von einer Zellularzone zu einer anderen Zellularzone bewegt wird, um eine automatische Wiederanmeldung des Gerätes zu erreichen.

## Revendications

1. Appareil téléphonique cellulaire radio, ledit appareil comprenant des dispositifs pour établir une connexion et recevoir l'énergie électrique d'une batterie (B1) et un émetteur récepteur téléphonique cellulaire radio duplex (1 ; C1) ayant des circuits électroniques activés par ladite énergie électrique adaptée pour recevoir, gérer, traiter et émettre des signaux téléphoniques cellulaires dans une première bande de fréquence et ayant un numéro de téléphone, l'appareil téléphonique cellulaire radio étant caractérisé par :
un second récepteur radio (4 ; C2) recevant des signaux dans une seconde bande de fréquence et ayant un numéro d'appel de personne codé spécifique, et
un commutateur commandé normalement ouvert (3 ; S2) entre la batterie (B1) et lesdits circuits électroniques cellulaires radio duplex (1 ; C1), et
des dispositifs (3) pour fermer ledit commutateur commandé normalement ouvert en réponse à une réception par ledit second récepteur radio (4 ; C2) dudit nombre d'appel de personne codé spécifique transmis sur un. signal radio dans ladite seconde bande de fréquence afin de fournir l'énergie auxdits circuits électroniques téléphonique cellulaire radio duplex (1 ; C1).

2. Appareil selon la revendication 1 caractérisé en outre par un dispositif pour recevoir le numéro de téléphone après avoir fourni l'énergie auxdits circuits électroniques radio téléphoniques cellulaires duplex (1 ; C1) et pour connecter un appel via la première bande de fréquence.

3. Appareil selon la revendication 1 caractérisé en outre par un dispositif qui, lorsque ledit commutateur a été fermé en réponse audit nombre d'appel de personne codé spécifique, maintient ledit commutateur dans l'état fermé au moins jusqu'à ce qu'un temps prédéterminé se soit écoulé.

4. Appareil selon la revendication 1 ou 2 dans lequel les dispositifs pour fermer ledit commutateur sont tels que ledit commutateur est maintenu fermé jusqu'à ce qu'un signal prédéterminé soit fourni.

5. Appareil selon la revendication 4 comprenant en outre un dispositif pour désactiver ledit signal prédéterminé en réponse à la fin d'un appel reçu par l'appareil.

6. Appareil selon la revendication 1 dans lequel le dispositif (3) pour fermer le commutateur normalement ouvert comprend un circuit de verrouillage adapté pour être verrouillé dans un état prédéterminé en réponse à ladite réception dudit nombre d'appel de personne codé spécifique.

7. Appareil selon la revendication 6, dans lequel ledit circuit de verrouillage incorpore un commutateur (10) adapté pour être fermé en réponse audit nombre d'appel de personne codé spécifique, le commutateur fermant un circuit de courant qui maintient le commutateur dans un état fermé, ledit circuit de courant incorporant un second commutateur fermé (14), ledit second commutateur fermé étant adapté pour s'ouvrir en réponse à un signal prédéterminé pour libérer le circuit de verrouillage.

8. Appareil selon la revendication 6 dans lequel ledit circuit de verrouillage incorpore une porte OU (15) adaptée pour être pourvue d'une impulsion (5) en réponse audit signal transmis spécifique, la sortie (16) de la porte OU étant reliée à une entrée (18) d'une porte ET inversée (17), la sortie (19) de la porte ET inversée étant reliée à l'autre entrée de la porte OU, la sortie de la porte OU étant reliée à un dispositif de commutation adapté pour activer le récepteur et l'émetteur normalement inactifs, un conducteur (7) étant relié à l'autre entrée de la porte ET inversée adapté pour fournir ledit signal prédéterminé à la porte ET inversée lorsqu'on veut désactiver le récepteur à haute fréquence.

9. Appareil selon la revendication 1 dans lequel une mise en marche automatique des circuits radio téléphoniques cellulaires duplex (1 ; C1) est validée lorsque l'appareil se déplace d'une zone cellulaire à une autre zone cellulaire afin de réaliser le réenregistrement automatique de l'appareil.
